# FASCICULE DE BREVET EUROPEEN

(11) **EP 2 870 650 B1**
(45) Date de publication et mention de la délivrance du brevet: **27.04.2016**
(21) Numéro de dépôt: 13744611.8
(22) Date de dépôt: 24.06.2013
(51) Int. Cl.: H01M 8/02, H01M 8/12, H01M 8/24, C25B 9/18

(54) **PROCÉDÉ DE FABRICATION D'ÉLÉMENTS DE CONTACT DANS UN DISPOSITIF ÉLECTROCHIMIQUE TEL QUE SOFC OU EHT**
VERFAHREN ZUR HERSTELLUNG VON KONTAKTELEMENTEN IN EINER ELEKTROCHEMISCHEN VORRICHTUNG WIE SOFC ODER SOEC
METHOD OF FABRICATING CONTACT ELEMENTS IN AN ELECTROCHEMICAL DEVICE SUCH AS SOFC OR SOEC

(30) Priorité: 05.07.2012 FR 1256474
(43) Date de publication de la demande: 13.05.2015
(73) Titulaire: Commissariat à l'Énergie Atomique et aux Énergies Alternatives, 75015 Paris (FR)
(72) Inventeur: DI IORIO, Stéphane, F-38250 Lans-en-vercors (FR); MOREL, Bertrand, F-38950 Saint Martin Le Vinoux (FR); RADO, Cyril, F-38000 Grenoble (FR)
(74) Mandataire: Chevalier, Renaud Philippe
(86) Numéro de dépôt international: PCT/FR2013/051462
(87) Numéro de publication internationale: WO 2014/006298

(56) Documents cités:
- WO-A2-2009/094289
- US-A1- 2007 178 004
- US-A1- 2012 064 436

## Description

La présente invention concerne un procédé de fabrication d'un élément de contact dans un dispositif électrochimique tel que :
- les piles à combustible à oxydes solides (ci-après abrégé « SOFC », d'après l'acronyme anglais de Solid Oxide Fuel Cells),
- les électrolyseurs haute température à oxydes solides (ci-après abrégé EHT, selon l'acronyme Electrolyseur Haute Température mais aussi connu sous l'abréviation « SOEC » selon l'acronyme anglais Solid Oxide Electrolyzer Cell).

Dans le cadre de la présente invention, on entend par dispositif électrochimique, un dispositif qui comprend :
- au moins une cellule constituée d'un assemblage électrode à hydrogène-électrolyte-électrode à oxygène,
- au moins deux éléments de contact disposés sur l'électrode à hydrogène et l'électrode à oxygène,
- au moins deux interconnecteurs disposés sur chacun des éléments de contact.

L'interconnecteur est métallique et assure la jonction entre deux cellules adjacentes.

Dans un dispositif électrochimique de type EHT, la molécule d'eau est dissociée en dihydrogène à l'électrode à hydrogène (cathode), les ions O²⁻ migrent à travers l'électrolyte pour se recombiner coté électrode à oxygène (anode) en dioxygène. La cellule a donc pour fonction de produire du dihydrogène en dissociant des molécules d'eau.

Dans un dispositif électrochimique de type SOFC, l'oxygène est réduit à l'électrode à oxygène (cathode), les ions O²⁻ migrent à travers l'électrolyte pour être oxydé par le dihydrogène à l'électrode à hydrogène (anode). La cellule a alors pour fonction de produire de l'électricité en combinant dihydrogène et dioxygène.

L'interconnecteur amène le courant et distribue les gaz (vapeur d'eau, dioxygène, dihydrogène, et éventuellement un gaz vecteur tel que du diazote).

L'élément de contact améliore le contact électrique entre l'interconnecteur métallique et l'électrode (à savoir l'électrode à hydrogène ou ou l'électrode à oxygène).

Un dispositif électrochimique tel que décrit ci-dessus est privilégié comme moyen de conversion de l'énergie chimique d'un combustible en énergie électrique s'il est plus performant que les autres moyens connus de conversion de l'énergie chimique en énergie électrique.

La performance d'un tel dispositif chimique s'apprécie par son efficacité à produire de l'énergie électrique grâce aux réactions électrochimiques mises en oeuvre au sein de la cellule. Cette efficacité est liée à la qualité des contacts électriques établis entre les interconnecteurs et les électrodes, et ce grâce aux éléments de contact.

En effet, toute perte ohmique dans un dispositif électrochimique est préjudiciable, car elle contribue à en diminuer son rendement global. A cet égard, les pertes ohmiques sont particulièrement importantes et donc problématiques dans le cas des dispositifs électrochimiques.

C'est pourquoi, on cherche à améliorer la qualité des contacts électriques entre les interconnecteurs et les électrodes pour augmenter les performances de ces dispositifs électrochimiques.

Dans un dispositif électrochimique, du côté de l'électrode à hydrogène, une grille de nickel est classiquement utilisée et donne des résultats satisfaisants, et ce à faibles coûts.

Mais, les éléments de contact qui assurent le passage du courant du côté de l'électrode à oxygène font actuellement l'objet de nombreuses études afin d'en améliorer leur qualité, et ce en recherchant des coûts de fabrication les plus faibles.

Il est connu d'utiliser des grilles en or comme éléments de contact du côté de l'électrode à oxygène. Ce matériau est mou et présente ainsi une bonne capacité d'accommodation mécanique, par exemples pour :
- combler les défauts de planéité,
- lisser une surface présentant une rugosité importante de l'électrode et/ou de l'interconnecteur.

Par ailleurs, l'or présente aussi l'avantage d'être un bon conducteur électrique et d'avoir une résistance excellente à la corrosion.

Ainsi, les propriétés mécaniques et la bonne conductivité électrique de l'or permettent d'obtenir un bon contact électrique entre l'interconnecteur et l'électrode et font de la grille en or une forme de réalisation appropriée comme élément de contact dans un dispositif électrochimique tel qu'une SOFC ou un EHT.

Cependant, un tel matériau présente l'inconvénient d'être très cher. Il n'est donc pas spécialement intéressant d'un point de vue économique de l'utiliser comme élément de contact, du fait qu'il contribue à maintenir élevé le coût de production d'un dispositif électrochimique tel qu'une SOFC ou EHT.

C'est pourquoi, d'autres formes de réalisation d'éléments de contact, fabriqués à partir de matériaux plus intéressants économiquement, ont été mises en oeuvre. Il s'agit de matériaux en céramique. Mais, ces matériaux présentent l'inconvénient d'avoir une capacité d'accommodation mécanique pas aussi performante que celle d'une grille en or. Un tel élément de contact est connu de US 2007/178004.

Ainsi, aucune des formes de réalisation des éléments de contact connues de l'art antérieur ne sont, à ce jour, pleinement satisfaisantes pour concilier les paramètres suivants :
- une conductivité élevée ;
- une capacité d'accommodation mécanique aux irrégularités de surface que peuvent comprendre les interconnecteurs et les électrodes ;
- un faible coût de leurs matériaux constitutifs pour ne pas entraver, pour des raisons économiques, leur utilisation dans des dispositifs électrochimiques tels que des SOFC et des EHT.

La présente invention se propose de remédier à l'ensemble des inconvénients détaillés ci-dessus relatifs aux éléments de contact de l'art antérieur en proposant, à partir de matériaux à faibles coûts, un procédé de fabrication d'éléments de contact d'un dispositif électrochimique tel qu'une SOFC ou un EHT tout à fait innovant, aboutissant à l'obtention d'éléments de contacts plus performants, du fait qu'ils combinent à la fois une conductivité élevée et une capacité d'accommodation mécanique particulièrement avantageuse.

L'invention a pour objet un procédé de fabrication d'un élément de contact d'un dispositif électrochimique tel qu'une SOFC ou un EHT qui comprend les étapes suivantes :
a) on dispose de :
   - au moins une cellule constituée par un assemblage électrode à hydrogène - électrolyte - électrode à oxygène,
   - au moins un premier interconnecteur ;
   - au moins un second interconnecteur ;
b) on dépose au moins une couche d'un matériau conducteur sur le premier interconnecteur et/ou le second interconnecteur ;
c) on assemble un dispositif électrochimique en disposant la cellule entre le premier interconnecteur et le second interconnecteur de manière à ce que la couche de matériau conducteur soit en contact avec l'électrode à oxygène et/ou l'électrode à hydrogène de la cellule ;
ledit procédé se caractérisant en ce que :
d) on réalise un traitement thermomécanique sur le dispositif électrochimique obtenu à l'issue de l'étape c) de manière à former au moins un élément de contact, constitué dudit matériau conducteur et qui assure le contact électrique entre lesdits interconnecteurs et lesdites électrodes le traitement thermomécanique consistant concomitamment à soumettre le dispositif électrochimique à une température comprise entre 850°C et 1200°C et à lui appliquer une contrainte mécanique comprise entre 0,01 et 10 MPa,

Dans le cadre de la présente invention, « appliquer une contrainte mécanique » signifie que l'on applique une pression qui correspond à une force exercée sur une surface. Il s'agit d'une pression relative, car elle correspond à la différence de pression par rapport à la pression atmosphérique.

Le procédé de fabrication selon l'invention est réalisé à la pression atmosphérique et lorsqu'on effectue l'étape d), une contrainte mécanique supplémentaire (ou autrement dit une pression relative) est appliquée sur le dispositif électrochimique.

Le matériau conducteur présente, au moins pendant une période de temps au cours du traitement thermomécanique de l'étape d), une porosité comprise entre 30% et 80%, de préférence comprise entre 40% et 70%.

Selon un mode de réalisation préféré de l'invention, à l'issue de l'étape c) d'assemblage et préalablement à l'étape d) du traitement thermomécanique, on chauffe le dispositif électrochimique à sa température nominale de fonctionnement, à savoir à une température qui est comprise entre environ 600°C et environ 900°C, de manière préférée d'environ 800°C.

Selon un mode de réalisation de l'invention, à l'issue de l'étape d) de traitement thermomécanique, on abaisse la température du dispositif électrochimique à la température nominale de fonctionnement du dispositif électrochimique, à savoir à une température qui est comprise entre 600°C et 900°C, de manière préférée d'environ 800°C. De manière préférée, avant d'abaisser la température du dispositif électrochimique, on diminue la contrainte mécanique d'au plus 90% de sa valeur. Dans ce mode de réalisation de l'invention, la diminution de la température est alors effectuée en maintenant toujours une contrainte mécanique sur le dispositif électrochimique.

Le traitement thermomécanique de l'étape d) procure les avantages suivants :
- une augmentation de la surface de contact entre l'électrode et l'interconnecteur ;
- une bonne cohésion entre les grains du matériau conducteur et ainsi une bonne accommodation mécanique entre l'électrode et l'interconnecteur, car les défauts de surface de ces éléments du dispositif électrochimique sont comblés.

De plus, il a été observé que les dispositifs électrochimiques équipés d'éléments de contact fabriqués selon le procédé de l'invention protègent les interconnecteurs contre la corrosion, et ce à la différence de la grille en or utilisée comme élément de contact du côté de l'électrode à oxygène.

Ainsi, outre l'aspect économique, les éléments de contact obtenus selon le procédé de l'invention sont plus avantageux que la grille en or.

Grâce au procédé de fabrication d'éléments de contact selon l'invention, les résistances de contact entre les interconnecteurs et les électrodes du dispositif électrochimique tel qu'une SOFC et un EHT sont diminuées. Par conséquent, la performance du dispositif électrochimique équipé de tels éléments de contact est améliorée par rapport à d'autres dispositifs comprenant des éléments de contact réalisés à partir de matériaux en céramique, et ce avec les avantages que ni son coût de fabrication ni sa structure en sont pour autant modifiés.

Bien que du côté de l'électrode à hydrogène, l'élément de contact sous la forme d'une grille en nickel soit satisfaisant dans des dispositifs électrochimiques tels que des SOFC ou des EHT, il convient de noter que le procédé de fabrication d'élément de contact selon l'invention peut être mis en oeuvre aussi bien pour fabriquer :
- des éléments de contact assurant le contact électrique entre les interconnecteurs et les électrodes à oxygène du dispositif électrochimique,
- que des éléments de contact assurant le contact électrique entre les interconnecteurs et les électrodes à hydrogène du dispositif électrochimique.

Certes, le procédé de fabrication selon l'invention sera avantageusement mis en oeuvre pour la fabrication des éléments de contact assurant le contact électrique entre les interconnecteurs et les électrodes à oxygène pour lesquels il n'existait pas à ce jour de forme de réalisation satisfaisante.

C'est pourquoi, de manière avantageuse, à l'étape b), on dépose au moins une couche de matériau conducteur sur le premier interconnecteur et à l'étape c), on constitue un dispositif électrochimique en disposant la cellule entre le premier interconnecteur et le second interconnecteur, de manière à ce que la couche de matériau conducteur soit en contact avec l'électrode à oxygène de la cellule.

De manière préférée, le premier interconnecteur et le second interconnecteur sont métalliques et sont réalisés en un acier inoxydable, par exemple en CROFER ® 22 APU, commercialisé par la société ThyssenKrupp VDM. De manière préférée, les interconnecteurs métalliques comprennent en outre une couche de protection contre la corrosion. Il peut s'agir d'une couche d'un matériau qui comprend Co₂MnO₄.

Cette couche de protection contre la corrosion permet d'éviter que l'interconnecteur ne se détériore au cours de l'utilisation du dispositif électrochimique qui s'effectue généralement à une température de l'ordre de 700°C à 800°C, et ce pendant environ 30 000 à 40 000 heures.

A cet égard, il convient de noter que le traitement thermomécanique, bien que réalisé à des températures de l'ordre de 850°C à 1200°C, ne détériore pas de manière sensible les interconnecteurs du dispositif électrochimique, étant donné que la durée du traitement thermomécanique est très courte (de l'ordre de quelques heures) comparée à celle d'une utilisation normale du dispositif électrochimique. Ainsi, il ne se produit pas, ou seulement de manière limitée, de phénomène de corrosion au niveau des interconnecteurs durant le traitement thermomécanique.

Bien entendu, le premier interconnecteur et le second interconnecteur peuvent être réalisés à partir d'autres matériaux qui sont couramment utilisés dans les dispositifs électrochimiques tels que les SOFC et les EHT et qui sont parfaitement à la portée de l'homme du métier.

De manière avantageuse, le matériau conducteur est un matériau dont la conductivité électrique est d'au moins 0,1 S.cm⁻¹ sous air à 800°C, et de préférence supérieure à 1 S.cm⁻¹ sous air à 800°C.

Le choix d'un matériau conducteur approprié pour la réalisation d'éléments de contact de qualité est à la portée de l'homme du métier. En effet, le procédé de fabrication selon l'invention ne modifie pas la valeur de la conductivité électrique du matériau conducteur constitutif de l'élément de contact fabriqué au cours de ce procédé.

Le matériau conducteur peut être choisi parmi les matériaux dont sont constituées les électrodes à oxygène.

De manière préférée, le matériau conducteur est un matériau en céramique conductrice qui est inerte aux matériaux constitutifs de l'électrode, et ce aux températures du traitement thermomécanique, à savoir comprises entre 850°C et 1200°C. De cette manière, il n'y a pas de risque de génération de nouveaux composés non conducteurs au cours du procédé de fabrication d'éléments de contact selon l'invention.

Dans un mode de réalisation avantageux de l'invention, le matériau conducteur est choisi parmi les matériaux en céramique conductrice, à savoir dont la conductivité électrique est supérieure à 0,1 S.cm⁻¹ sous air à 800°C, par exemple comprise entre 0,1 et 10 S.cm⁻¹ sous air à 800°C.

Préférentiellement, le matériau en céramique est non fritté afin de lui conférer une certaine souplesse, d'obtenir une porosité importante et une bonne capacité d'écrasement.

De manière avantageuse, le matériau conducteur est une céramique conductrice et peut être choisi dans le groupe constitué par :
- La_{0,6}Sr_{0,4}Co_{0,8}Fe_{0,2}O₃ (abrégé LSCF) ;
- La_{0,8}Sr_{0,2}Cu_{0,9}Fe_{0,1}O_{2,5} (abrégé LSCuF) ;
- La_{0,7}Sr_{0,3}CoO₃ (abrégé LSC) ;
- Sm_{0,5}Sr_{0,5}CoO₃ (abrégé SSC) ;
- SmBa_{0,5}Sr_{0,5}Co₂O₅ (abrégé SBSC) ;
- GdSrCo₂O₅ (abrégé GSC) ;
- La_{0,65}Sr_{0,3}MnO₃ (abrégé LSM) ;
- LaBaCo₂O₅ (abrégé LBC) ;
- YBaCo₂O₅ (abrégé YBC) ;
- Nd_{1,8}Ce_{0,2}CuO₄ (abrégé NCC) ;
- La_{0,8}Sr_{0,2}Co_{0,3} Mn_{0,1}Fe_{0,5}O₃ (abrégé LSCMF) ;
- La_{0,98}Ni_{0,6}Fe_{0,4}O₃ (abrégé LNF) ;
- La_{1,2}Sr_{0,8}NiO₄ (abrégé LSN) ;
- La_{0,7}Sr_{0,3}FeO₃ (abrégé LSF) ;
- La₂Ni_{0,6}Cu_{0,4}O₄ (abrégé LNC).

De manière tout à fait avantageuse, le matériau en céramique conductrice est choisi dans le groupe constitué par le LSM (ou autrement dit le manganite de lanthane dopé strontium), le LSC (ou autrement dit le cobaltite lanthane dopé strontium), le LNF (Nickel Ferrite de Lanthane), et le LSCF (ou autrement dit le ferro-cobaltite de lanthane dopé strontium).

Selon un mode de réalisation de l'invention, lorsqu'une couche de matériau conducteur est en contact avec l'électrode à hydrogène, le matériau conducteur peut être un mélange d'au moins une céramique et d'au moins un métal. Ce mode de réalisation présente l'avantage que la céramique n'est pas nécessairement conductrice, étant donné que la conductivité électrique requise pour des éléments de contact d'un dispositif électrochimique tel qu'une SOFC ou un EHT peut être obtenue grâce au métal présent dans le mélange.

Par exemple, il peut s'agir d'un mélange de la céramique YSZ (à savoir une zircone stabilisée à l'oxyde d'yttrium) avec du nickel qui a été mis en forme à haute température (1300-1450°C) par frittage de poudres d'oxyde de nickel et de la céramique YSZ. Les proportions molaires du métal et de la céramique peuvent être de l'ordre de 50/50. Avantageusement, la quantité de métal peut être plus importante que celle de la céramique de manière à augmenter la conductivité électrique de ce matériau conducteur.

Bien entendu, ce mode de réalisation de l'invention n'est pas approprié pour le cas d'un élément de contact en contact avec une électrode à oxygène, du fait que si le matériau conducteur constitutif de cet élément de contact contient du métal, le métal va s'oxyder et ne sera par conséquent plus conducteur.

A l'étape b) du procédé selon l'invention, on peut déposer la couche de matériau conducteur grâce à l'une des techniques suivantes : sérigraphie, spray, ou encore au pinceau. Bien entendu, le dépôt de la couche de matériau conducteur peut être effectué avec d'autres techniques à la portée de l'homme du métier qui permettent de conserver une capacité d'écrasement de la couche de matériau conducteur sur l'interconnecteur métallique.

De manière préférée, la technique de dépôt de la couche de matériau conducteur est la sérigraphie ou le spray.

Avantageusement, la couche de matériau conducteur a une épaisseur comprise entre 1 et 500 µm, de manière préférée une épaisseur de l'ordre de 80 à 100 µm.

Le matériau conducteur peut être déposé en une seule couche ou en plusieurs couches successives, en fonction de l'épaisseur de chaque couche déposée et de l'épaisseur de la couche de matériau conducteur souhaitée.

Dans un mode de réalisation de l'invention, une couche de matériau conducteur de 80 µm est obtenue par le dépôt successif de 4 couches de 20 µm.

La porosité de la couche du matériau conducteur est le rapport du volume de vide sur le volume total de la couche de matériau.

Le matériau conducteur présente, au moins pendant une période de temps au cours du traitement thermomécanique de l'étape d), une porosité comprise entre 30% et 80%, de préférence comprise entre 40% et 70%.

Si la porosité est inférieure à 30%, le matériau conducteur ne pourra pas être suffisamment écrasé au cours de l'étape d) de traitement thermomécanique, et ainsi l'accommodation mécanique ci-dessus évoquée ne sera pas pleinement satisfaisante.

Une porosité supérieure à 50% a pour avantage un écrasement plus aisé du matériau conducteur et permet ainsi d'abaisser la température nécessaire pour effectuer de manière satisfaisante le traitement thermomécanique.

Mais une porosité supérieure à 80% risque de fragiliser et de rendre cassant le matériau conducteur au cours de l'étape d) de traitement thermomécanique.

Dans un mode de réalisation de l'invention, on dépose au cours de l'étape b) au moins une couche d'un matériau conducteur ayant une porosité appropriée, à savoir une porosité comprise entre 30% et 80%, de manière préférée entre 40% et 70%, sur le au moins un premier interconnecteur et/ou le au moins un second interconnecteur.

Dans un autre mode de réalisation de l'invention, on dépose au cours de l'étape b) au moins une couche d'un matériau conducteur comprenant au moins un agent porogène sur le premier interconnecteur et/ou le second interconnecteur.

L'agent porogène est avantageusement choisi dans le groupe constitué par le noir de carbone, le méthacrylate de méthyle, le polystyrène, l'amidon, la fécule de pomme de terre. Le choix d'un agent porogène approprié est à la portée de l'homme du métier.

La porosité du matériau conducteur est alors obtenue, dans ce mode de réalisation de l'invention, au cours du traitement thermomécanique de l'étape d) sous l'effet de la température qui est, rappelons-le, d'au moins environ 850°C. En effet, les agents porogènes brûlent à partir de températures de l'ordre de 350°C à 450°C.

Au cours de l'étape d) du traitement thermomécanique, la température est comprise entre environ 850 °C de 1200 °C. La limite supérieure de la température mise en oeuvre au cours de cette étape d) est limitée par le risque de vieillissement des autres éléments du dispositif électrochimique (les électrodes, l'électrolyte et les interconnecteurs).

Cependant, une température élevée, de l'ordre de 950°C est préconisée, car cela crée un début de frittage (ou autrement dit une création de pont entre grain ou encore une coalescence des grains de matière) de la couche de matériau conducteur et favorise ainsi une bonne accommodation mécanique.

Il convient de noter que le traitement thermomécanique est réalisé à une température comprise entre 850°C et 1200 °C, soit une température supérieure à la température d'utilisation du dispositif électrochimique qui est généralement comprise entre 600°C et 900°C.

Au cours du traitement thermomécanique, la température peut croître puis décroître. La gamme de vitesse de chauffe et/ou de refroidissement peut être comprise entre 0,5°C/min et 500°C/min, de manière préférée entre 1 et 5 °C/min, au cours du traitement thermomécanique de l'étape d).

Une vitesse de chauffe rapide, supérieure ou égale à 5°C présente l'avantage de mettre en forme la couche de matériau conducteur, et ce sans produire de vieillissement des autres éléments du dispositif électrochimique.

A contrario, une vitesse de chauffe très lente favorise les déformations de type fluage, la couche de matériau conducteur se mettant en place lentement. Un compromis entre la durée du traitement thermomécanique (lié à la vitesse de chauffe) et la température atteinte au cours de ce traitement thermomécanique est à mettre au point en fonction du matériau conducteur choisi, de sa microstructure et de sa porosité. Cette mise au point est parfaitement à la portée de l'homme du métier.

Dans un mode de réalisation avantageux de l'invention, le dispositif électrochimique peut être configuré de manière à ce qu'au cours de l'étape d) de traitement thermomécanique, l'ensemble du dispositif électrochimique reste à la température nominale de fonctionnement, à savoir à une température de l'ordre de 800°C), à l'exception de la couche de matériau conducteur qui est soumise à une température comprise entre 850°C et 1200°C. En d'autres termes, seule la couche de matériau conducteur subit les variations de températures au cours de l'étape d) de traitement thermomécanique.

Selon un mode de réalisation de l'invention, l'interconnecteur sur lequel a été déposée la couche de matériau conducteur constitue un système de chauffage, car le passage d'électricité dans un matériau conducteur tend à échauffer celui-ci par effet joule. En effet, l'interconnecteur réalisé de manière préférée en acier inoxydable a une conductivité thermique appropriée, à savoir de l'ordre de 25 W.m⁻¹.K⁻¹.

La gamme de la contrainte mécanique appliquée au cours de l'étape d) du traitement thermomécanique peut être comprise entre 0,01 MPa et 10 MPa, de préférence entre 0,05 et 5 MPa.

Une contrainte mécanique élevée, de l'ordre de 0,1 MPa permet une déformation importante de la couche de matériau conducteur, et donc une bonne accommodation mécanique entre l'électrode et l'interconnecteur. De plus, une contrainte mécanique élevée présente l'avantage de diminuer la température du traitement thermomécanique, permettant ainsi de préserver au maximum d'une possible dégradation les autres éléments du dispositif électrochimique (les électrodes, l'électrolyte et les interconnecteurs).

La contrainte mécanique ne doit cependant pas être trop élevée, c'est-à-dire supérieure à 10 MPa pour éviter tout risque de casse du dispositif électrochimique.

Avantageusement, la contrainte mécanique maximale qui est appliquée doit l'être lorsque la température a atteint sa valeur maximale au cours du traitement thermomécanique, de manière à coupler les effets de la température et de la contrainte mécanique sur la déformation de la couche de matériau conducteur.

Dans un mode de réalisation de l'invention, la contrainte mécanique est exercée pendant une durée comprise entre 1 seconde et 10 heures, et de manière préférée entre 5 minutes et 5 heures. La durée du traitement thermomécanique de l'étape d) dépend à la fois de la température et de la contrainte mécanique appliquée.

A titre d'exemple, une fois la température nominale de fonctionnement du dispositif électrochimique atteinte, à savoir une température de l'ordre de 800°C, un traitement thermomécanique peut être réalisé de la manière suivante :
- On exerce une contrainte mécanique de 0,1 MPa tout en élevant la température de 800°C à 920°C, avec une vitesse de chauffe de 1 °C.min⁻¹ ;
- On maintient la température à 920°C et la contrainte mécanique de 0,1 MPa pendant une demi-heure ;
- On diminue la température de 920°C à 860°C avec une vitesse de refroidissement 1 °C.min⁻¹ tout en maintenant la contrainte mécanique de 0,1 MPa ;
- On maintient la température à 860°C et la contrainte mécanique de 0,1 MPa pendant une heure.
- Enfin, on diminue la température de 860°C à 800°C avec une vitesse de refroidissement 1 °C.min⁻¹ tout en maintenant la contrainte mécanique de 0,1 MPa.

A l'issue du procédé de fabrication d'éléments de contact selon l'invention (à savoir quand les éléments de contact ont été mis en place dans le dispositif électrochimique), le dispositif électrochimique est ramené à la température nominale de fonctionnement du dispositif électrochimique qui est de l'ordre de 800°C, et ce pendant toute sa durée d'utilisation.

L'invention concerne aussi un dispositif électrochimique tel qu'une SOFC ou un EHT équipé d'au moins un élément de contact obtenu avec le procédé de fabrication tel que décrit ci-dessus.

L'invention sera mieux comprise à l'aide de la description détaillée qui est exposée ci-dessous en référence au dessin annexé représentant, à titre d'exemple non limitatif, une forme de réalisation, sous forme schématique, d'un dispositif électrochimique au sens de la présente invention (à savoir qu'il peut s'agir d'une SOFC ou d'un EHT), ainsi que des résultats expérimentaux mis en forme à partir de graphes.

### Description des figures

La figure 1 est une vue schématique en coupe longitudinale d'un dispositif électrochimique équipé d'éléments de contact obtenus selon le procédé de fabrication de l'invention.
La figure 2 est un graphe de la résistance de contact en fonction du temps d'un dépôt de 100µm de LSM poreux sous l'effet d'une contrainte mécanique de 0,1 MPa.
La figure 3 est un graphe de la résistance de contact en fonction du temps d'un dépôt de 100µm de LSM poreux sous l'effet ou non d'une contrainte mécanique de 0,1 MPa.

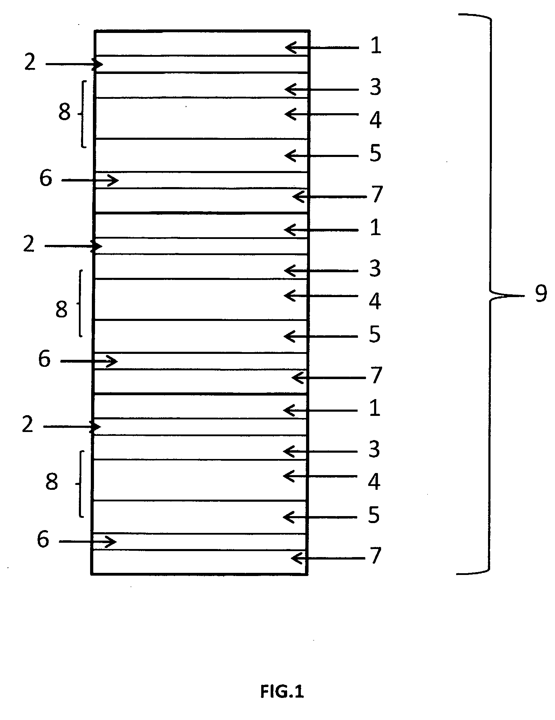

Sur la figure 1 est représenté schématiquement un dispositif électrochimique 9 au sens de la présente invention (à savoir qu'il peut s'agir d'une SOFC ou d'un EHT) qui comprend :
- trois cellules 8 constituées chacune d'un assemblage électrode à oxygène 3 - electrolyte 4 - électrode à hydrogène 5;
- trois premiers interconnecteurs 1 ;
- trois seconds interconnecteurs 7 ;
- trois éléments de contact 6 sous la forme de grilles de nickel ;
- trois éléments de contact 2 obtenus selon le procédé de fabrication d'éléments de contact selon l'invention.

### Partie expérimentale :

### Expérimentation n°1 :

On disposait de :
- une cellule constituée par un assemblage électrode à oxygène-électrolyte - électrode à oxygène. Ce type de cellule permet d'obtenir une configuration symétrique pour le système électrochimique et de simplifier l'étude des résistances de contact de l'électrode à oxygène.
- un premier interconnecteur métallique ;
- un second interconnecteur métallique.

Les électrodes étaient des électrodes de LSM, l'électrolyte était une zircone dopée à 3% d'yttrium et les interconnecteurs étaient en Crofer ®.

On a déposé par sérigraphie quatre couches de LSM poreux avec une porosité de l'ordre de 50 %, d'épaisseur totale de 100 µm sur chacun des deux interconnecteurs métalliques.

On a constitué un dispositif électrochimique en disposant la cellule entre le premier interconnecteur métallique et le second interconnecteur métallique de manière à ce que le dépôt de LSM poreux soit en contact avec les électrodes à oxygène de la cellule symétrique.

Les opérations suivantes ont été réalisées successivement :
1) On a chauffé le dispositif jusqu'à 800°C, et ce avec un gradient de température de 5°C/min avec une contrainte mécanique de 0,1 MPa.
2) Ensuite, on a maintenu la température à 800°C pendant une durée de 15 heures environ, et ce en maintenant la contrainte mécanique de 0,1 MPa.
3) On a ensuite réalisé un traitement thermomécanique sur le dispositif électrochimique de la manière suivante :
   - On a appliqué une contrainte mécanique de 0,1 MPa tout en élevant la température de 800°C à 920°C, avec une vitesse de chauffe de 1 °C.min⁻¹ ;
   - On a maintenu la température de 920°C et la contrainte mécanique de 0,1 MPa pendant une demi-heure ;
   - On a diminué la température de 920°C à 860°C avec une vitesse de refroidissement 1 °C.min⁻¹ tout en maintenant la contrainte mécanique de 0,1 MPa ;
   - On a maintenu la température de 860°C et la contrainte mécanique de 0,1 MPa pendant une heure.
   - Enfin, on a diminué la température de 860°C à 800°C avec une vitesse de refroidissement 1 °C.min⁻¹ tout en maintenant une contrainte mécanique de 0,1 MPa.
   Le traitement thermomécanique a duré environ 6 heures. De plus, cette étape 3) a correspondu à un traitement thermomécanique tel que mis en oeuvre dans le procédé de fabrication d'éléments de contact selon l'invention.
4) A l'issue de ce traitement thermomécanique, le dispositif électrochimique a été maintenu à une température de 800°C avec le maintien de l'application d'une contrainte mécanique de 0,1 MPa pendant 3 heures environ.

Au cours de ces étapes 1) à 4), on a constamment calculé la résistance de contact de la couche de LSM poreux à partir de la résistance haute fréquence mesurée en effectuant une spectroscopie d'impédance électrochimique.

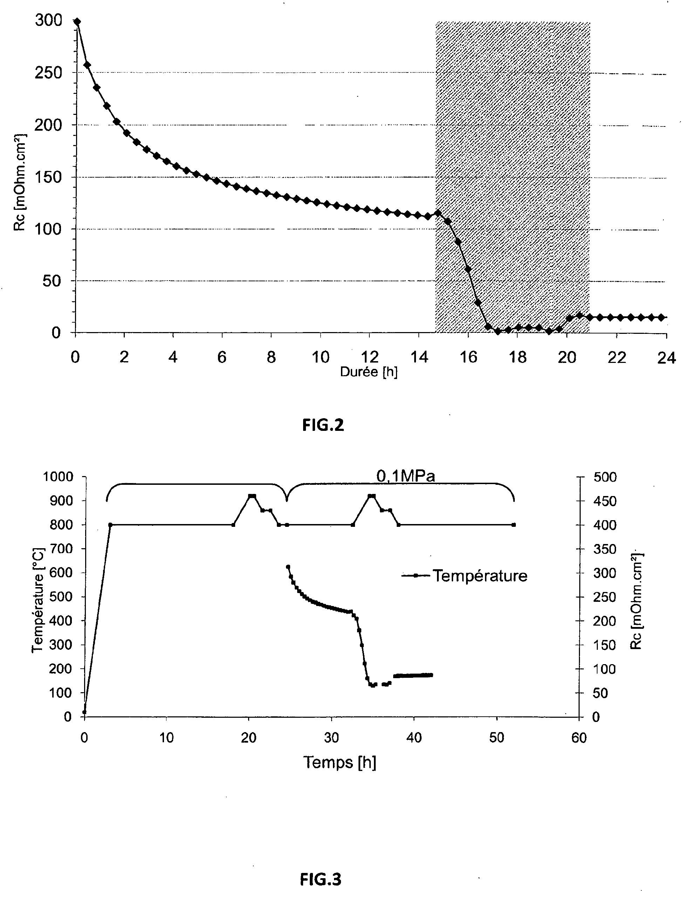

La figure 2 est un graphe exprimant la résistance de contact ainsi mesurée en fonction du temps.

Sur ce graphe, l'intervalle de temps pendant lequel le dispositif électrochimique a été soumis au traitement thermomécanique détaillé ci-dessus apparaît sous la forme d'une zone grisée.

Au vu du graphe de la figure 2, on relève les points suivants :
- La résistance de contact a diminué de 300 mOhm.cm² à 112 mOhm.cm² lorsque le dispositif électrochimique a été maintenu à 800°C et sous une contrainte mécanique de 0,1 MPa. La résistance de contact était déjà quasiment constante au bout d'environ dix heures.
- La résistance de contact a ensuite considérablement diminué au cours du traitement thermomécanique en passant d'une valeur de 112 mOhm.cm² à seulement 15 mOhm.cm².

Ainsi, le traitement de thermomécanique a eu pour effet d'abaisser significativement la résistance de contact d'une valeur d'environ 100 mOhm.cm² à une valeur d'environ 15 mOhm.cm². Une telle valeur de 15 mOhm.cm² n'aurait jamais été atteinte sans ce traitement thermomécanique, car comme expliqué ci-dessus, à 800°C et sous l'effet d'une contrainte mécanique de 0,1 MPa, la résistance de contact était devenue quasiment stationnaire au bout de dix heures avec une valeur de l'ordre de 100 mOhm.cm².

Par ailleurs, on remarque sur le graphe de la figure 2 que vers la fin du traitement thermomécanique, la résistance de contact fluctue quelque peu, puis se stabilise à une valeur de 15 mOhm.cm². Ces légères fluctuations peuvent s'expliquer par les fluctuations de températures au cours de la stabilisation thermique après le ce traitement thermomécanique.

### Expérimentation n°2 :

On disposait d'un dispositif expérimental identique à celui utilisé pour l'expérimentation n°1.

Les opérations suivantes ont été réalisées successivement :
1) En 3 heures, on a élevé la température du dispositif électrochimique d'une température de 20°C à 800°C, et ce sans appliquer de contrainte mécanique.
2) On a maintenu le dispositif électrochimique à 800°C pendant 15 heures, et ce sans appliquer de contrainte mécanique.
3) On a soumis le dispositif électrochimique au cycle de températures suivant, et ce sans appliquer de contrainte mécanique :
   - On a élevé la température de 800°C à 920°C en 2 heures ;
   - On a maintenu la température de 920°C pendant une demi-heure ;
   - On a diminué la température de 920°C à 860°C en 1 heure ;
   - On a maintenu la température de 860°C pendant 1 heure.
   - Enfin, on a diminué la température de 860°C à 800°C en 1 heure.
4) On a maintenu le dispositif électrochimique à une température de 800°C pendant 1 heure.
5) On a maintenu le dispositif électrochimique à une température de 800°C tout en appliquant concomitamment une contrainte mécanique de 0,1 MPa, et ce pendant 8 heures.
6) Tout en maintenant la contrainte mécanique de 0,1 MPa, on a soumis le dispositif électrochimique au cycle de températures suivant :
   - On a élevé la température de 800°C à 920°C en 2 heures ;
   - On a maintenu la température de 920°C pendant une demi-heure ;
   - On a diminué la température de 920°C à 860°C en 1 heure ;
   - On a maintenu la température de 860°C pendant 1 heure.
   - Enfin, on a diminué la température de 860°C à 800°C en 1 heure.
   En d'autres termes, cette étape 6) a correspondu à un traitement thermomécanique tel que mis en oeuvre dans le procédé de fabrication d'éléments de contact selon l'invention.
7) Tout en maintenant la contrainte mécanique de 0,1MPa, on a soumis le dispositif électrochimique à une température de 800°C, et ce pendant encore 14 heures.

La résistance de contact a été mesurée dès lors qu'on a appliqué une contrainte mécanique de 0,1 MPa sur le dispositif électrochimique.

Sur le graphe de la figure 3 sont représentés les éléments suivants :
- L'évolution de la température en fonction du temps au cours des étapes 1) à 7) telles que détaillées ci-dessus.
- La résistance de contact mesurée en fonction du temps mesurée dès lors qu'une contrainte mécanique a été appliquée sur le dispositif électrochimique (soit à partir de l'étape 5).

D'après le graphe de la figure 3, on relève les points suivants :
La 1^{ière} mesure de résistance de contact qui a été prise dès qu'on applique une contrainte mécanique de 0,1MPa (donc au début de l'étape 5) lorsque la température est de 800°C a une valeur de l'ordre de 312 mOhm.cm².

Au bout de 8 heures, avec le maintien d'une température de 800°C et d'une contrainte mécanique de 0,1 MPa, la résistance de contact diminue de 312 mOhm.cm² pour se stabiliser à une valeur de l'ordre de 220 mOhm.cm².

Cette valeur de 220 mOhm.cm² est plus élevée que la valeur de 112 mOhm.cm² qui avait été mesurée dans l'expérimentation n°1.

Ainsi, le traitement thermique réalisé à aux étapes 3) et 4), donc préalablement à l'étape 5) a eu des conséquences préjudiciables : la valeur de la résistance de contact obtenue au bout de 8 heures avec application d'une contrainte mécanique de 0,1 MPa est environ deux fois plus élevée que s'il n'y avait pas eu ce traitement thermique au préalable (cas de l'expérimentation 1).

De plus, lorsque le traitement thermomécanique de l'étape 6) a été réalisé sur le dispositif électrochimique, la valeur de la résistance de contact obtenue à l'issue de ce traitement est de l'ordre de 86 mOhm.cm². Elle est aussi beaucoup plus élevée que celle obtenue à l'issue du traitement thermomécanique de l'expérimentation 1.

Autrement dit, le traitement thermomécanique effectué à l'étape 6) n'a pas permis de rattraper les conséquences du traitement thermique réalisé au préalable sur la mesure de la résistance de contact.

Il ressort ainsi des résultats obtenus au cours de ces deux expérimentations que ce sont les effets couplés de la température et de l'application d'une contrainte mécanique qui influent sur la valeur de la résistance de contact d'un élément de contact réalisé à partir de LSM.

En d'autres termes, c'est bien grâce à un traitement thermomécanique que la couche de LSM a été correctement déformée pour que sa résistance de contact soit de valeur la plus faible possible, ce qui est l'effet recherché, car caractéristique d'un élément de contact de qualité.

## Revendications

1. Procédé de fabrication d'un élément de contact dans un dispositif électrochimique (9) tel qu'une SOFC ou un EHT qui comprend les étapes suivantes :
a) on dispose de :
- au moins une cellule (8) constituée par un assemblage électrode à hydrogène (5) - électrolyte (4) - électrode à oxygène (3) ;
- au moins un premier interconnecteur (1) ;
- au moins un second interconnecteur (7) ;
b) on dépose au moins une couche d'un matériau conducteur sur le premier interconnecteur (1) et/ou le second interconnecteur (7) ;
c) on assemble un dispositif électrochimique (9) en disposant la cellule (8) entre le premier interconnecteur (1) et le second interconnecteur (7) de manière à ce que la couche de matériau conducteur soit en contact avec l'électrode à oxygène (3) et/ou l'électrode à hydrogène (5) de la cellule (8) ;
ledit procédé étant **caractérisé en ce que** :
d) on réalise un traitement thermomécanique sur le dispositif électrochimique (9) obtenu à l'issue de l'étape c) de manière à former au moins un élément de contact (2) constitué dudit matériau conducteur et qui assure le contact électrique entre lesdits interconnecteurs (1,7) et lesdites électrodes (3,5), le traitement thermomécanique consistant concomitamment à soumettre le dispositif électrochimique (9) à une température comprise entre 850°C et 1200°C et à lui appliquer une contrainte mécanique comprise entre 0,01 et 10 MPa.

2. Procédé de fabrication selon la revendication 1, **caractérisé en ce que** le matériau conducteur présente, au moins pendant une période de temps au cours du traitement thermomécanique de l'étape d), une porosité comprise entre 30% et 80%, de préférence comprise entre 40% et 70%.

3. Procédé de fabrication selon la revendication 1 ou la revendication 2, **caractérisé en ce qu'**à l'étape b), on dépose au moins une couche de matériau conducteur sur le premier interconnecteur (1) et à l'étape c), on constitue un dispositif électrochimique en disposant la cellule (8) entre le premier interconnecteur (1) et le second interconnecteur (7) de manière à ce que la couche de matériau conducteur soit en contact avec l'électrode à oxygène (3) de la cellule (8).

4. Procédé de fabrication selon l'une quelconque des revendications 1 à 2, **caractérisé en ce que** le matériau conducteur a conductivité électrique d'au moins 0,1 S.cm⁻¹ sous air à 800°C.

5. Procédé de fabrication selon la revendication précédente, **caractérisé en ce que** le matériau conducteur est choisi dans le groupe constitué par :
- La_{0,6}Sr_{0,4}Co_{0,8}Fe_{0,2}O₃ (LSCF) ;
- La_{0,8}Sr_{0,2}Cu_{0,9}Fe_{0,1}O_{2,5} (LSCuF) ;
- La_{0,7}Sr_{0,3}CoO₃ (LSC) ;
- Sm_{0,5}Sr_{0,5}CoO₃ (SSC) ;
- SmBa_{0,5}Sr_{0,5}Co₂O₅ (SBSC) ;
- GdSrCo₂O₅ (GSC) ;
- La_{0,65}Sr_{0,3}MnO₃ (LSM) ;
- LaBaCo₂O₅ (LBC) ;
- YBaCo₂O₅ (YBC) ;
- Nd_{1,8}Ce_{0,2}CuO₄ (NCC) ;
- La_{0,8}Sr_{0,2}Co_{0,3} Mn_{0,1} Fe_{0,6}O₃ (LSCMF) ;
- La_{0,98}Ni_{0,6}Fe_{0,4}O₃ (LNF) ;
- La_{1,2}Sr_{0,8}NiO₄ (LSN) ;
- La_{0,7}Sr_{0,3}FeO₃ (LSF) ;
- La₂Ni_{0,6}Cu_{0,4}O₄ (LNC).

6. Procédé de fabrication selon l'une quelconque des revendications précédentes, **caractérisé en ce qu'**on dépose au cours de l'étape b) au moins une couche d'un matériau conducteur ayant une porosité comprise entre 30% et 80% sur le premier interconnecteur (1) et/ou le second interconnecteur (7).

7. Procédé de fabrication selon l'une quelconque des revendications 1 à 5, **caractérisé en ce qu'**on dépose au cours de l'étape b) au moins une couche d'un matériau conducteur comprenant au moins un agent porogène sur le premier interconnecteur (1) et/ou le second interconnecteur (7).

8. Procédé de fabrication selon l'une des revendications précédentes, **caractérisé en ce que** la gamme de vitesse de chauffe et/ou de refroidissement au cours de l'étape d) de traitement thermomécanique est comprise entre 0,5°C/min et 500°C/min.

9. Procédé de fabrication selon l'une des revendications précédentes, **caractérisé en ce que** la gamme de la contrainte mécanique appliquée au cours de l'étape d) du traitement thermomécanique est comprise entre 0,05 MPa et 5 MPa.

10. Dispositif électrochimique (9) tel qu'une SOFC ou un EHT équipé d'au moins un élément de contact (2) obtenu avec le procédé de fabrication selon l'une quelconque des revendications précédentes.

## Patentansprüche

1. Verfahren zum Herstellen eines Kontaktelements in einer elektrochemischen Vorrichtung (9) wie z.B. einer SOFC oder einer EHT, das folgenden Schritte aufweist:
a) Verfügen über:
- mindestens eine Zelle (8), die aus einer Anordnung von Wasserstoffelektrode (5) - Elektrolyt (4) - Sauerstoffelektrode (3) besteht,
- mindestens einen ersten Verbinder (1);
- mindestens einen zweiten Verbinder (7);
b) Ablegen mindestens einer Schicht aus einem leitfähigen Material auf dem ersten Verbinder (1) und/oder dem zweiten Verbinder (7)
c) Montieren einer elektrochemischen Vorrichtung (9), indem die Zelle (8) zwischen dem ersten Verbinder (1) und den zweiten Verbinder (7) so angeordnet wird, dass die Schicht aus leitfähigem Material mit der Sauerstoffelektrode (3) und/oder der Wasserstoffelektrode (5) der Zelle (8) in Kontakt ist;
wobei das Verfahren **dadurch gekennzeichnet ist, dass**:
d) eine thermomechanische Behandlung auf der elektrochemischen Vorrichtung (9) durchgeführt wird, die am Ausgang von Schritt c) erhalten wird, so dass mindestens ein Kontaktelement (2) gebildet wird, das aus dem leitfähigen Material besteht, und das den elektrischen Kontakt zwischen den Verbindern (1, 7) und den Elektroden (3, 5) sicherstellt, wobei die thermomechanische Behandlung begleitend darin besteht, die elektrochemische Vorrichtung (9) einer Temperatur zu unterziehen, die zwischen 850 °C und 1200 °C liegt, und auf sie eine mechanische Spannung anzuwenden, die zwischen 0,01 und 10 MPa liegt.

2. Verfahren nach Anspruch 1, **dadurch gekennzeichnet, dass** das leitfähige Material mindestens während eines Zeitraums im Laufe der thermomechanischen Behandlung von Schritt d) eine Porosität aufweist, die zwischen 30 % und 80 %, vorzugsweise zwischen 40 % und 70 % liegt.

3. Verfahren nach Anspruch 1 oder Anspruch 2, **dadurch gekennzeichnet, dass** in Schritt b) mindestens eine Schicht aus leitfähigem Material auf dem ersten Verbinder (1) abgelegt wird und in Schritt c) eine elektrochemische Vorrichtung gebildet wird, indem die Zelle (8) zwischen dem ersten Verbinder (1) und dem zweiten Verbinder (7) angeordnet wird, so dass die Schicht aus leitfähigem Material mit der Sauerstoffelektrode (3) der Zelle (8) in Kontakt ist.

4. Verfahren zur Herstellung nach einem der Ansprüche 1 bis 2, **dadurch gekennzeichnet, dass** das leitfähige Material eine elektrische Leitfähigkeit von mindestens 0,1 S.cm⁻¹ unter Luft bei 800 °C aufweist.

5. Verfahren zur Herstellung nach dem vorhergehenden Anspruch, **dadurch gekennzeichnet, dass** das leitfähige Material ausgewählt ist aus der Gruppe, bestehend aus:
- La_{0,6}Sr_{0,4}Co_{0,8}Fe_{0,2}O₃ (LSCF);
- La_{0,8}Sr_{0,2}Cu_{0,9}Fe_{0,1}O_{2,5} (LSCuF);
- La_{0,7}Sr_{0,3}CoO₃ (LSC);
- Sm_{0,5}Sr_{0,5}CoO₃ (SSC);
- SmBa_{0,5}Sr_{0,5}CO₂O₅ (SBSC);
- GdSrCo₂O₅ (GSC);
- La_{0,85}Sr_{0,3}MnO₃ (LSM);
- LaBaCo₂O₅ (LBC);
- YBaCo₂O₅ (YBC);
- Nd_{1,8}Ce_{0,2}CUO₄ (NCC);
- La_{0,8}Sr_{0,2}Co_{0,3}Mn_{0,1} Fe_{0,6}O₃ (LSCMF);
- La_{0,98}Ni_{0,6}Fe_{0,4}O₃ (LNF);
- La_{1,2}Sr_{0,a}NiO₄ (LSN);
- La_{0,7}Sr_{0,3}FeO₃ (LSF);
- La₂Ni_{0,5}Cu_{0,4}O₄ (LNC).

6. Verfahren zur Herstellung nach einem der vorhergehenden Ansprüche, **dadurch gekennzeichnet, dass** im Laufe von Schritt b) mindestens eine Schicht aus einem leitfähigen Material mit einer Porosität, die zwischen 30 % und 80 % liegt, auf dem ersten Verbinder (1) und/oder dem zweiten Verbinder (7) abgelegt wird.

7. Verfahren zur Herstellung nach einem der Ansprüche 1 bis 5, **dadurch gekennzeichnet, dass** im Laufe von Schritt b) mindestens eine Schicht aus einem leitfähigen Material mit mindestens einem porenbildenden Mittel auf dem ersten Verbinder (1) und/oder dem zweiten Verbinder (7) abgelegt wird.

8. Verfahren zur Herstellung nach einem der vorhergehenden Ansprüche, **dadurch gekennzeichnet, dass** der Bereich der Geschwindigkeit der Erwärmung und/oder der Abkühlung im Laufe von Schritt d) der thermomechanischen Behandlung zwischen 0,5 °C/min und 500 °C/min liegt.

9. Verfahren zu Herstellung nach einem der vorhergehenden Ansprüche, **dadurch gekennzeichnet, dass** der Bereich der mechanischen Spannung, die im Laufe von Schritt d) der thermomechanischen Behandlung angewendet wird, zwischen 0,05 MPa und 5 Mpa liegt.

10. Elektrochemische Vorrichtung (9) wie z.B. eine SOFC oder eine EHT ausgestattet mit mindestens einem Kontaktelement (2), das mit dem Verfahren zur Herstellung nach einem der vorhergehenden Ansprüche erhalten wird.

## Claims

1. A method for manufacturing a contact element in an electrochemical device (9) such as a SOFC or a HTE which comprises the following steps:
a) there are disposed:
- at least one cell (8) consisting of a hydrogen electrode (5) - electrolyte (4) - oxygen electrode (3) assembly ;
- at least a first interconnector (1) ;
- at least a second interconnector (7) ;
b) at least one layer of a conductive material is deposited over the first interconnector (1) and/or the second interconnector (7) ;
c) an electrochemical device (9) is assembled by disposing the cell (8) between the first interconnector (1) and the second interconnector (7) so that the conductive material layer is in contact with the oxygen electrode (3) and/or the hydrogen electrode (5) of the cell (8);
said method being **characterized in that**:
d) a thermo-mechanical treatment is carried out on the electrochemical device (9) obtained at the end of step c) so as to form at least one contact element (2) constituted of said conductive material and which ensures electrical contact between said interconnectors (1,7) et said electrodes (3,5), the thermo-mechanical treatment consisting of concomitantly subjecting the electrochemical device (9) to a temperature comprised between 850 °C and 1200 °C and applying thereto a mechanical stress comprised between 0.01 and 10 MPa.

2. The manufacturing method according to claim 1, **characterized in that** the conductive material exhibits, at least for a period of time during the thermo-mechanical treatment of step d), a porosity comprised between 30% and 80%, preferably comprised between 40% and 70%.

3. The manufacturing method according to claim 1 or claim 2, **characterized in that**, in step b), at least one conductive material layer is deposited over the first interconnector (1) and in step c), an electrochemical device is constituted by disposing the cell (8) between the first interconnector (1) and the second interconnector (7) so that the conductive material layer is in contact with the oxygen electrode (3) of the cell (8).

4. The manufacturing method according to any one of claims 1 to 2, **characterized in that** the conductive material has an electrical conductivity of at least 0.1 S.cm⁻¹ under air at 800 °C.

5. The manufacturing method according to the preceding claim, **characterized in that** the conductive material is selected in the group consisting of:
- La_{0.6}Sr_{0.4}Co_{0.8}Fe_{0.2}O₃ (LSCF) ;
- La_{0.8}Sr_{0.2}Cu_{0.9}Fe_{0.1}O_{2.5} (LSCuF) ;
- La_{0.7}Sr_{0.3}CoO₃ (LSC) ;
- Sm_{0.5}Sr_{0.5}CoO₃ (SSC) ;
- SmBa_{0.5}Sr_{0.5}Co₂O₅ (SBSC);
- GdSrCo₂O₅ (GSC);
- La_{0.65}Sr_{o.3}MnO₃ (LSM) ;
- LaBaCo₂O₅ (LBC);
- YBaCo₂O₅ (YBC);
- Nd_{1.8}Ce_{0.2}CuO₄ (NCC);
- La_{0.8}Sr_{0.2}Co_{0.3}Mn_{0.1}Fe_{0.6}O₃ (LSCMF) ;
- La_{0.98}Ni_{0.6}Fe_{0.4}O₃ (LNF) ;
- La_{1.2}Sr_{0.8}NiO₄ (LSN) ;
- La_{0.7}Sr_{0.3}FeO₃ (LSF) ;
- La₂Ni_{0.6}Cu_{0.4}O₄ (LNC).

6. The manufacturing method according to any one of the preceding claims, **characterized in that** at least one layer of a conductive material having a porosity comprised between 30% and 80% is deposited, during step b), over the first interconnector (1) and/or the second interconnector (7).

7. The manufacturing method according to any one of claims 1 to 5, **characterized in that**, at least one layer of a conductive material comprising at least one pore-forming agent is deposited, during step b), over the first interconnector (1) and/or the second interconnector (7).

8. The manufacturing method according to any of the preceding claims, **characterized in that** the range of heating and/or cooling rate during the step d) of thermo-mechanical treatment is comprised between 0.5 °C/min and 500 °C/min.

9. The manufacturing method according to any of the preceding claims, **characterized in that** the range of the mechanical stress applied during the step d) of thermo-mechanical treatment is comprised between 0.05 MPa and 5 MPa.

10. An electrochemical device (9) such as a SOFC or a HTE equipped with at least one contact element (2) obtained with the manufacturing method according to any one of the preceding claims.
